# EUROPÄISCHE PATENTSCHRIFT

(11) **EP 4 157 682 B1**
(45) Veröffentlichungstag und Bekanntmachung des Hinweises auf die Patenterteilung: **19.06.2024**
(21) Anmeldenummer: 21727358.0
(22) Anmeldetag: 10.05.2021
(51) Int. Cl.: B60B 27/00, G01P 3/44, B60T 8/32

(54) **RADNABENANORDNUNG FÜR EIN FAHRZEUGRAD SOWIE POLRING EINES ABS-SENSORS**
WHEEL HUB ARRANGEMENT AND POLE RING FOR AN ABS SENSOR
DISPOSITION DE MOYEU DE ROUE ET ANNEAU DE POLE POUR UN CAPTEUR ABS

(30) Priorität: 26.05.2020 DE 102020114052; 18.11.2020 DE 102020130414
(43) Veröffentlichungstag der Anmeldung: 05.04.2023
(73) Patentinhaber: BPW Bergische Achsen Kommanditgesellschaft, 51674 Wiehl (DE)
(72) Erfinder: SCHLIMBACH, Andreas, 53804 Much (DE); SIEBEL, Reiner, 53804 Much (DE)
(74) Vertreter: DREISS Patentanwälte PartG mbB
(86) Internationale Anmeldenummer: PCT/DE2021/100427
(87) Internationale Veröffentlichungsnummer: WO 2021/239181

(56) Entgegenhaltungen:
- WO-A1-2018/219896
- DE-A1- 10 237 504
- DE-A1-102011 084 261
- DE-A1-102014 106 519

## Beschreibung

Die Erfindung betrifft eine Radnabenanordnung für ein Fahrzeugrad, mit einer über eine Nabenlagerung drehbar auf einem Achselement angeordneten Radnabe, die fahrzeuginnenseitig in einem Nabenhals endet, dessen Innenumfang eine Öffnung für den zentralen Durchtritt des Achselements definiert und auf dessen Außenumfang ein Befestigungsabschnitt eines Polrings eines ABS-Sensors montiert ist, wobei Bestandteil des Polrings ein einstückig mit dem Befestigungsabschnitt ausgebildeter Impulsgeberabschnitt ist, der sich von dem Befestigungsabschnitt zu der Radnabenachse hin erstreckt. Die Erfindung betrifft zudem einen entsprechenden Polring.

Eine gattungsgemäße Radnabenanordnung mit Polring ist aus der DE 10 2011 084 261 A1 bekannt. Die Radnabe ist über eine Nabenlagerung drehbar auf einem drehfesten Achselement angeordnet und endet fahrzeuginnen in einem Nabenhals, dessen Innenumfang eine Öffnung für den zentralen Durchtritt des Achselements, auf dem die Radnabe drehgelagert ist, definiert. Der Außenumfang des Nabenhalses ist dazu ausgebildet, den Polring eines ABS-Sensors zu befestigen. Hierzu ist der Polring mit einem Befestigungsabschnitt versehen, der auf dem Außenumfang des Nabenhalses abgestützt, bzw. dort aufgeklemmt ist. Bestandteil des Polrings ist ferner ein zu dem Befestigungsabschnitt des Polrings einstückiger Impulsgeberabschnitt, der sich, ausgehend von dem Befestigungsabschnitt, zu der zentralen Achse der Radnabe hin erstreckt. Auf dem Impulsgeberabschnitt ist der Polring mit in Umfangsrichtung gleichmäßig verteilten Schlitzen versehen. Der ABS-Sensor ist im Bereich des Achselements so befestigt, dass er den Schlitzen exakt gegenüberliegt, und so die Drehgeschwindigkeit des Polrings sensiert und in ein entsprechendes Steuersignal eines Antiblockiersystems einer Fahrzeugbremse oder, im Falle einer angetriebenen Fahrzeugachse, in ein Steuersignal einer Antriebsschlupfregelung überführt.

Eine ähnlich aufgebaute Anordnung aus einer Radnabe und einem daran befestigten Polring ist z. B. aus der DE 10 2014 106 519 A1 bekannt.

Gemeinsam ist den Radnabenanordnungen aus dem Stand der Technik, dass der Nabenhals jeweils einen Polringsitz aufweist, auf den der Polring durch entsprechende Vorrichtungen in axialer Bewegung aufgepresst wird. Folglich sind die Polringe ausschließlich reibschlüssig auf dem Nabenhals gehalten. Bei einer Demontage der Radnabenanordnung und einer einhergehenden Entfernung des Polrings von dem Nabenhals, wird eine entsprechende Vorrichtung benötigt, um eine zerstörungsfreie Demontage des Polrings zu ermöglichen. Beispielsweise kann eine speziell hierfür konstruierte Abziehvorrichtung axial an der Stirnseite des Befestigungsabschnitts oder an einer innenseitigen Umbördelung des Polrings angelegt werden, woraufhin der Polring von der Radnabe abgezogen werden kann.

Der Erfindung liegt die **Aufgabe** zugrunde, eine Lösung für eine vereinfachte und zerstörungsfreie Demontage des Polrings und ohne den Einsatz von Spezialwerkzeug zu schaffen. Zur Lös u n g wird zum einen eine einen Polring beinhaltende Radnabenanordnung mit den Merkmalen des Anspruchs 1, und zum anderen ein Polring mit den Merkmalen des Anspruchs 10 vorgeschlagen.

Die Radnabenanordnung ist dadurch gekennzeichnet, dass der Nabenhals an seinem Außenumfang versehen ist
mit einem um den Nabenhals herumführenden und gegenüber dem Polringsitz zur Radnabenachse hin abgesenkten Werkzeugeingriffsbereich,
und dass der Befestigungsabschnitt Aussparungen aufweist, die über den Umfang des Befestigungsabschnitts verteilt angeordnet sind und uneinheitliche axiale Abstände zu dem Impulsgeberabschnitt aufweisen, wobei die dem Impulsgeberabschnitt axial nächstgelegene Aussparung den Werkzeugeingriffsbereich zumindest teilweise radial überdeckt.

Der Polring ist dadurch gekennzeichnet, dass der Befestigungsabschnitt Aussparungen aufweist, die über den Umfang des Befestigungsabschnitts versetzt angeordnet sind und uneinheitliche axiale Abstände zu dem Impulsgeberabschnitt aufweisen, wobei die Aussparungen als in Umfangsrichtung sich erstreckende Schlitze ausgebildet sind.

Mit der erfindungsgemäßen Radnabenanordnung wird eine vereinfachte und zerstörungsfreie Demontage des Polring von dem Radnabenhals ermöglicht. Aufgrund der den Werkzeugeingriffsbereich zumindest teilweise überdeckenden Aussparung ist es möglich, ein Standartwerkzeug, beispielsweise einen Schlitzschraubendreher, durch die dem Impulsgeberabschnitt axial nächstgelegene Aussparung zu führen und die Werkzeugspitze im Werkzeugeingriffsbereich zu arretieren, wobei der Werkzeugschaft gegen die Aussparung anliegt. Durch eine Hebelbewegung des Werkzeugs ist es dann möglich, den Polring ein Stück von dem Polringsitz herunter zu drücken. Die über den Umfang des Befestigungsabschnitts versetzt angeordneten Aussparrungen weisen uneinheitliche axiale Abstände zu dem Impulsgeberabschnitt auf, so dass, wenn der Hebelweg einer Aussparung zum Werkzeugeingriffsbereich durch das axiale Verschieben des Polringes auf dem Radnabenhals ausgeschöpft ist, sich bereits mindestens eine weitere Aussparung optimal über dem Werkzeugeingriffsbereich befindet. Mithin überdeckt jetzt diese nächste Aussparung den Werkzeugeingriffsbereich zumindest teilweise radial, wobei das Hebelwerkzeug nun in diesen Bereich umgesteckt und der oben genannte Hebelvorgang wiederholt wird. Folglich sind dementsprechend viele Aussparungen in dem Befestigungsabschnitt ausgebildet, dass ein vollständiges Abhebeln des Polrings von dem Radnabenhals möglich ist.

Bevorzugt weist eine Aussparung jeweils eine ihr in Bezug auf die Polringachse gegenüberliegende Aussparung auf, wobei die Aussparungspaare untereinander uneinheitliche axiale Abstände zu den Impulsgeberabschnitt aufweisen.

Bei einer bevorzugten Ausführungsform sind zwei ein Aussparungspaar bildende Aussparungen in Bezug auf die Polringachse einander gegenüberliegend angeordnet und weisen denselben axialen Abstand zu dem Impulsgeberabschnitt auf, wobei dieser axiale Abstand geringer ist, als der anderer Aussparungen. Mit anderen Worten sind auch zwei Aussparungen mit identischer axialer Position, bezogen auf die Polringachse, gegenüberliegend auf der Umfangsfläche des Befestigungsabschnitts ausgebildet. Bei dieser Ausführungsform ist es möglich, beidseitig jeweils ein Hebelwerkzeug anzusetzen, wobei durch synchrones Bedienen dieser beiden Werkzeuge die Verkantungsgefahr des Polrings auf dem Radnabenhals gegenüber einem Hebel von nur einer Seite verringert wird.

Bevorzugt sind zwei weitere, ebenfalls ein einander gegenüberliegendes Aussparungspaar bildende und den geringen axialen Abstand zu dem Impulsgeberabschnitt aufweisende Aussparungen vorhanden, wobei die Aussparungen der so vorhandenen beiden Aussparungspaare in 90 °-Winkelabständen zueinander versetzt um die Polringachse herum angeordnet sind. Somit sind die Aussparungen mit identischen Winkelabständen zueinander auf dem Umfang des Befestigungsabschnitts angeordnet. Wird die Anzahl der Aussparungspaare mit dem geringen axialen Abstand zu dem Impulsgeberabschnitt erhöht, wird deren Verteilung dementsprechend angepasst, um eine gleichmäßige Anordnung der Aussparungen beizubehalten. Jedoch ist auch eine Verteilung der Aussparungspaare mit verschiedenen Winkelabständen entlang des Befestigungsabschnitts denkbar.

Möglich ist auch, dass andere Aussparungspaare mit einem größeren axialen Abstand zu dem Impulsgeberabschnitt alternativ oder zusätzlich ebenfalls mehrpaarig ausgebildet sind.

Bevorzugt sind zwischen den zwei Aussparungspaaren mit dem identischen und geringsten axialen Abstand zu dem Impulsgeberabschnitt andere Aussparungspaare mit größeren axialen Abständen zu dem Impulsgeberabschnitt angeordnet. Auch diese Aussparungspaare sind mit gleichmäßigen Winkelabständen entlang des Befestigungsabschnitts verteilt. Aber auch hier ist eine Verteilung mit ungleichmäßigen Winkelabständen zwischen den Aussparungspaaren denkbar.

Vorzugsweise ist der Werkzeugeingriffsbereich als eine Stufe am fahrzeugseitigen Ende des Nabenhals ausgebildet. Mit anderen Worten handelt es sich bei der Nabe im Bereich des Polringsitzes um ein rotationssymmetrisches Bauteil mit einer zylindrischen Außenfläche, an die sich nach fahrzeuginnen ein Absatz anschließt, also eine Umfangsfläche mit reduziertem Radius.

Alternativ ist der Werkzeugeingriffsbereich als eine umlaufende Nut im Bereich des Polringsitzes ausgebildet. In diesem Fall befindet sich der Werkzeugeingriffsbereich auf der zylindrischen Außenfläche des Polringsitzes, allerdings nicht als ein Absatz, sondern als eine umlaufende Nut, welche den Polringsitz in zwei zylindrische Längsabschnitte unterteilt.

Die Werkzeugeingriffsbereiche sind dazu ausgebildet, die Spitze bzw. ein Ende eines als Hebel dienenden Standardwerkzeugs aufzunehmen und als Fixpunkt für eine Hebelbewegung zu dienen, mit dem Zweck, den aufgepressten Polring zerstörungsfrei ein Stück weit von dem Radnabenhals herunter zu schieben.

Um eine Demontage bzw. einen Austausch des Polrings von der Radnabe zu erleichtern, weisen die Aussparungen mit dem geringen axialen Abstand zu dem Impulsgeberabschnitt eine zu allen anderen Aussparungen abweichende Kontur auf. Diese Aussparungen liegen bei montiertem Polring dem Werkzeugeingriffsbereich am nächsten, wobei sie diesen teilweise überdecken. Diese Aussparungen dienen als erster Eingriffsbereich für die Hebelwerkzeuge, um diese an der Anlagefläche des Nabenhalses abzustützen.

Anhand der abweichenden Kontur der Aussparungen mit dem geringen axialen Abstand zu dem Impulsgeberabschnitt ist es für einem Monteur sofort erkennbar, in welche Aussparungen die beiden Hebelwerkzeuge als erstes eingeführt werden müssen, so dass ein zeitaufwändiges Ausprobieren bzw. Suchen eingespart wird.

Bevorzugt weisen die Aussparungen mit dem geringen axialen Abstand zu dem Impulsgeberabschnitt alternativ oder zusätzlich Markierungen auf. Diese sind unterschiedlich zu etwaigen Markierungen an allen anderen Aussparungen. Mit anderen Worten können die Aussparungen mit Markierungen versehen sein, die dem Monteur direkt zu erkennen geben, in welcher Reihenfolge das bzw. die Hebelwerkzeuge in die verschiedenen Aussparungen einzuführen sind. Beispielsweise kann es sich bei diesen Markierungen um eine Nummerierung in arabischen oder lateinischen Zahlen oder um eine Buchstabenfolge handeln.

Bevorzugt ist der Polring auf den Polringsitz der Radnabe axial aufgepresst, und dort ausschließlich reibschlüssig gehalten. Vorzugsweise sind der Polringsitz und der Werkzeugeingriffsbereich spanend bearbeitet und mit einer Rostschutzschicht versehen. Da sowohl Staub, als auch Feuchtigkeit durch den Fahrbetrieb in den Bereich des Polringsitzes gelangen, wird die Aufbringung einer Rostschutzschicht auf mindestens dem Polringsitz vorgeschlagen, um die Langlebigkeit der Radnabe zu erhöhen, sowie ein Festrosten des Polrings an der Radnabe zu vermeiden, was eine Demontage erschweren würde.

Bevorzugt ist der Polring ein Stanz-Biegeteil aus Metallblech, wobei vorzugsweise die gestanzten Aussparungen entlang ihrer Kontur eine nach außen gerichtete Falzkante aufweisen. Mit anderen Worten ist die durch die Stanzung an der Aussparung ausgebildete Falzkante auf der von der Anlagefläche abgewandten Seite des Befestigungsabschnitts ausgebildet. Die Herstellung des Polrings aus Metallblech birgt sowohl den Vorteil einer kosteneffizienten Produktion, als auch dass der Polring verhältnismäßig flexibel ist und sich daher für eine entsprechende Presspassung anbietet. Daher ist keine umfangreiche Bearbeitung des Polringsitzes nötig, die über den oben genannten Arbeitsschritt hinaus geht. Ferner ist es von Vorteil, die bei der Stanzung entstehende Falzkante abgewandt von der Anlagefläche des Polringsitzes auszubilden, um ein erleichtertes Gleiten bei der Montage oder Demontage des Polrings auf oder von dem Nabenhals zu ermöglichen. Mithin wird eine Beschädigung des Rostschutzes durch eine scharfkantige Falzkante vermieden.

Mit weiteren Ausgestaltungen wird für den Polring vorgeschlagen, dass dessen axiale Abstützung ausschließlich an einer zwischen dem Innenumfang und dem Außenumfang des Nabenhalses ausgebildeten Stirnfläche erfolgt, und dass für eine hohe mechanische Festigkeit des Polrings dessen Impulsgeberabschnitt an seinem Innenrand mit einer verstärkenden Umbördelung versehen ist. Die Umbördelung ist, neben der für gröbere Partikel nicht mehr passierbaren Restöffnungsbreite des Polrings gegenüber dem Achselement, auch dazu eingerichtet, als eine Anlagefläche für ein Spezialwerkzeug zu dienen, um eine Demontage auch auf herkömmliche Weise ausführen zu können.

Vorzugsweise ist der Impulsgeberabschnitt mit in Umfangsrichtung gleichmäßig verteilten Öffnungen, vorzugsweise Schlitzen, versehen, wobei zumindest einige der Öffnungen bzw. Schlitze eine Erstreckung nach außen hin aufweisen, die mindestens bis zum Radius des Innenumfangs des Nabenhalses reicht.

Besonders bevorzugt weisen die Öffnungen, vorzugsweise Schlitze, unterschiedliche radiale Erstreckungen auf, wobei die Erstreckung die für die Sensierung durch den ABS-Sensor notwendige Erstreckung ist, wobei die Erstreckung nach außen hin zwischen 2 und 10 mm größer ist, als die für die Sensierung durch den ABS-Sensor nötige Erstreckung.

In den Bereich hinter dem Polring eingedrungenes Schmutzwasser oder auch kleine Partikel können durch die nach außen hin verlängerten Öffnungen bzw. Schlitze wieder austreten, und zwar selbst dann, wenn sich der betreffende Umfangsabschnitt des Polrings bzw. der Radnabe unten befindet.

Weitere Maßnahmen werden nachstehend gemeinsam mit der Beschreibung bevorzugter Ausführungsbeispiele anhand der Figuren näher erläutert. Dabei zeigt:
- Fig. 1: einen Schnitt durch eine drehbar auf einem zentralen Achselement gelagerte Radnabe mit dem daran befestigtem Polring, wobei zusätzlich ein ABS-Sensor wiedergegeben ist;
- Fig. 1a: eine vergrößerte Teildarstellung der Gegenstände nach Fig. 1 im Bereich des Nabenhalses der Radnabe;
- Fig. 2: eine perspektivische Ansicht des Polrings gemäß einer ersten Ausführungsform;
- Fig. 3: eine perspektivische Ansicht des Polrings gemäß einer zweiten Ausführungsform;
- Fig. 4: eine stark schematische Seitenansicht nur des Nabenhalses der Radnabe mit derart aufgepresstem Polring zur Verdeutlichung des Zusammenspiels von Aussparungen und darunter angeordnetem Werkzeugeingriffsbereich;
- Fig. 5: eine schematische Schnittdarstellung der Radnabe mit aufgepresstem Polring sowie dem arretierten Hebelwerkzeug, zur Darstellung des Hebelmechanismus; und
- Fig. 6: eine perspektivische Ansicht des Polrings gemäß einer dritten Ausführungsform.

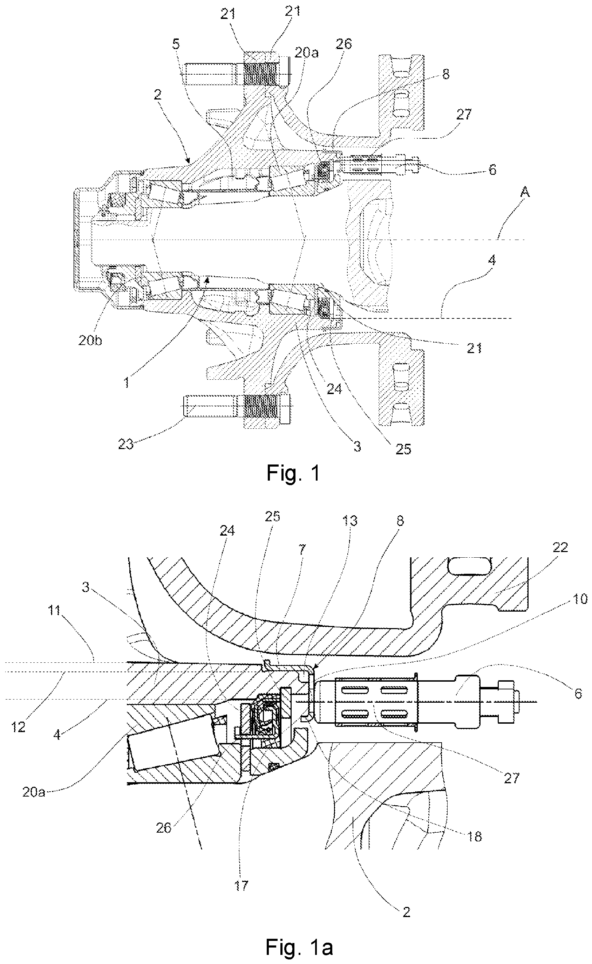

Die Figuren 1 und 1a, wobei die Figur 1a eine vergrößerte Teildarstellung der Gegenstände nach Fig. 1 im Bereich des Nabenhalses 3 der Radnabe 2 darstellt, zeigen einen Schnitt durch eine Radnabenanordnung in montiertem Zustand, mit einer über eine Nabenlagerung drehbar auf einem Achselement 1 angeordneten Radnabe 2. Zwei solche Achselemente 1 befinden sich vorzugsweise an den Enden eines langgestreckten, von der einen bis zur anderen Fahrzeugseite reichenden Achskörpers, z. B. des Achskörpers eines Nutzfahrzeugs.

Ferner ist das Achselement 1 als ein sich nach fahrzeugaußen hin verjüngendes Achselement gestaltet, auf dem Lagersitze für ein inneres Wälzlager 20a und ein äußeres Wälzlager 20b einer Wälzlagerung ausgebildet sind. Auf der so im Nabeninneren angeordneten Wälzlagerung ist die Radnabe 2 und damit das jeweilige Fahrzeugrad drehbar gelagert.

An einem äußeren Flansch 21 der Radnabe 2 kann auf einer Seite eine Bremsscheibe 22, und auf der gegenüberliegenden Seite das nicht dargestellte Fahrzeugrad mittels Radbolzen 23 befestigt sein. Hierzu befinden sich in dem Flansch 21 der Radnabe 2 Befestigungen mit Bohrungen zum Hindurchstecken der Radbolzen 23. Eine solche Radbefestigung und -lagerung eignet sich vor allem für nichtangetriebene Fahrzeugachsen, z. B. mitlaufende Achsen von Lkw-Anhängern.

Das Achselement 1 weist einwärts des inneren Wälzlagers 20a eine Stufe auf. Gegen die Stufe stützt sich der Innenring des Wälzlagers 20a unter axialer Zwischenlage eines Rings 24 ab. Der Ring 24 ist wegen seiner Abstützung gegen das Achselement feststehend ausgebildet. Der Außenrand des Rings 24 weist einen geringen radialen Abstand gegenüber dem Innenumfang 4 der Radnabe 2 auf.

Weiter fahrzeuginnenseitig ist am Innenumfang 4 der Radnabe 2 eine umlaufende Nut ausgebildet, in die ein Sicherungsring 25 eingesetzt ist. Dieser bildet einen radialen Vorsprung im Vergleich zum Innenumfang 4 der Radnabe 2, mit dessen Hilfe sich die Nabe 2 einschließlich der Nabenlagerung als Einheit nach außen von dem Achselement 1 herunterziehen lässt.

Fahrzeuginnenseitig, d. h. zur Fahrzeugmitte hin, ist die Wälzlagerung 20a, 20b durch eine in Verlängerung des Wälzlagers 20a angeordnete Dichtung 26 abgedichtet. Die Dichtung 26 umfasst den bereits erwähnten starren Ring 24 und außerdem eine zweiteilig aufgebaute Anordnung aus einem Innenring und einem Außenring. Innenring und Außenring sind so zueinander angeordnet, dass in axialer Richtung eine Verschachtelung erreicht wird.

Das innere Wälzlager 20a und das äußere Wälzlager 20b bilden gemeinsam mit der aus dem Ring 24, dem Innenring und dem Außenring bestehenden Dichtung 26 die Nabenlagerung der Radnabe 2. Eine Besonderheit dieser Nabenlagerung besteht darin, dass sie sich gemeinsam mit der Radnabe 2 und der Wälzlagerung 20a, 20b nach fahrzeugaußen von dem Achselement 1 abziehen lässt. Das Grundprinzip hierzu ist in der EP 0 407 719 B1 beschrieben. Beim Abziehen wird die Dichtung 26 der Nabenlagerung durch den innen an der Radnabe 2 fixierten und als radialer Vorsprung dienenden Sicherungsring 25 hintergriffen. Dies ist möglich, da der Außendurchmesser der Dichtung 26 größer ist, als der Innendurchmesser des Sicherungsrings 25. Beim Abziehen der Radnabe 2 gelangt der Sicherungsring 25 gegen den Außenring, dieser überträgt die Zugkräfte seinerseits axial auf den Ring 24, wodurch wiederum der Ring 24 die Axialkraft auf das Wälzlager 20a überträgt, und alle diese Teile mitgenommen werden. Ist die Radnabe 2 von dem Achselement 1 abgezogen, lassen sich nach Lösen des Sicherungsrings 25 alle Teile der Nabenlagerung aus der Radnabe 2 herausziehen, d. h. die Wälzlagerung 20a, 20b, der Ring 24 und die mehrteilige Dichtung 26.

Als Bestandteil einer elektrischen Vorrichtung zur Drehzahl- und/oder Drehrichtungserkennung ist an dem Achselement 1 ein z. B. induktiv arbeitender ABS-Sensor befestigt. Der ABS-Sensor 6 sitzt relativ stramm in einer den Sensor umgebenden Montagehülse 27, die ihrerseits starr an oder in dem Achselement 1 befestigt ist.

Dem ABS-Sensor 6 direkt und mit sehr kurzem Abstand gegenüberliegend ist an der Radnabe 1 ein Polring 8 montiert, der also mit der Radnabe 1 umläuft und Bestandteil der Sensoranordnung und der Radnabenanordnung ist. Der Polring 8 ist z. B. ein Stanz-Biegeteil aus Metallblech.

Die Radnabe 2 weist zur Montage des Polrings 8 fahrzeuginnenseitig einen Nabenhals 3 mit einem gegenüber dem radseitigen Radnabenteil verringerten Radius auf.

Die Figur 1a zeigt genauer, dass der Nabenhals 3 mit seinem Innenumfang 4 eine Öffnung 5 für den zentralen Durchtritt des Achselements 1 definiert, wobei der Außenumfang 11 des Nabenhalses 3 als ein Polringsitz 12, zur Aufnahme eines Befestigungsabschnitts 7 des Polrings 8 ausgebildet ist. Der Polring 8 ist auf den Polringsitz 12 durch axiales Aufschieben aufgepresst, und dort ausschließlich reibschlüssig gehalten.

Ein weiterer Bestandteil des Polrings 8 ist ein einstückig mit dem Befestigungsabschnitt 7 ausgebildeter Impulsgeberabschnitt 10, der sich von dem Befestigungsabschnitt 7 radial zu der Radnabenachse A hin erstreckt. An seinem radial inneren Rand ist der Impulsgeberabschnitt 10 mit einer Umbördelung 18 versehen, die zu einer Verstärkung des Polrings 8 gegenüber Biegebelastungen führt, was für den Montage- sowie den Demontageprozess der Radnabenanordnung von Vorteil ist.

Eine axiale Abstützung des Polrings 8 findet ausschließlich an einer zwischen dem Innenumfang 4 und dem Polringsitz 12, vorzugsweise spanend bearbeitet, ausgebildeten Stirnfläche 17 des Nabenhalses 3 statt. Dies führt zu einem sehr genauen Planlauf des Polrings 8, und damit zu einem exakten Sensorsignal. Zudem führt dieser Ort der axialen Abstützung zu einer verbesserten Festigkeit des Polrings 8, da dieser Biegebelastungen während des Montage- und Demontageprozesses besser aufnehmen bzw. aushalten kann.

Der Nabenhals 3 ist von solcher Länge, dass er innen zumindest Teile der mehrteiligen Nabenlagerung aufnimmt, nämlich die Dichtung 26, den Ring 24 sowie eventuell das innere Wälzlager 20a. Um die axiale Länge des Nabenhalses 3 und damit auch die axiale Gesamtlänge der Radnabe 2 trotzdem gering zu halten, wird der Polring 8 nicht am Innenumfang 4 des Nabenhalses 3 befestigt, wo bereits die Nabenlagerung und der Sicherungsring 25 angeordnet sind und entsprechend Platz beanspruchen. Stattdessen erfolgt die Befestigung des Polrings 8 auf dem Außenumfang 11 des Nabenhalses 3. Hierbei reicht, in Nabenlängsrichtung betrachtet, der Befestigungsabschnitt 7 bis über die Dichtung 26 der Nabenlagerung hinüber.

Der Nabenhals 3 ist an seinem Außenumfang 11 mit einem um den Nabenhals 3 herumführenden und gegenüber dem Polringsitz 12 zur Radnabenachse A hin abgesenkten Werkzeugeingriffsbereich 13 versehen. Insbesondere ist der Werkzeugeingriffsbereich 13 im Bereich des Polringsitzes 12 als eine Stufe am fahrzeugseitigen Ende des Nabenhals 3 ausgebildet. Mit anderen Worten reduziert sich der Außenradius des Nabenhalses 3 vom Polringsitz 12 zum Werkzeugeingriffsbereich 13 um einen bestimmten Wert.

Ferner, aber nicht dargestellt, kann der Werkzeugeingriffsbereich 13 auch als eine umlaufende Nut im axialen Bereich des Polringsitzes 12 ausgebildet sein, wobei dann an der fahrzeugseitigen Stirnseite nur eine schräge Fase ausgebildet ist.

Der Polringsitz 12 und der Werkzeugeingriffsbereich 13 sind spanend bearbeitet und mit einer Rostschutzschicht versehen, da beide Bereiche den Umwelteinflüssen, insbesondere der Feuchtigkeit ausgesetzt sind.

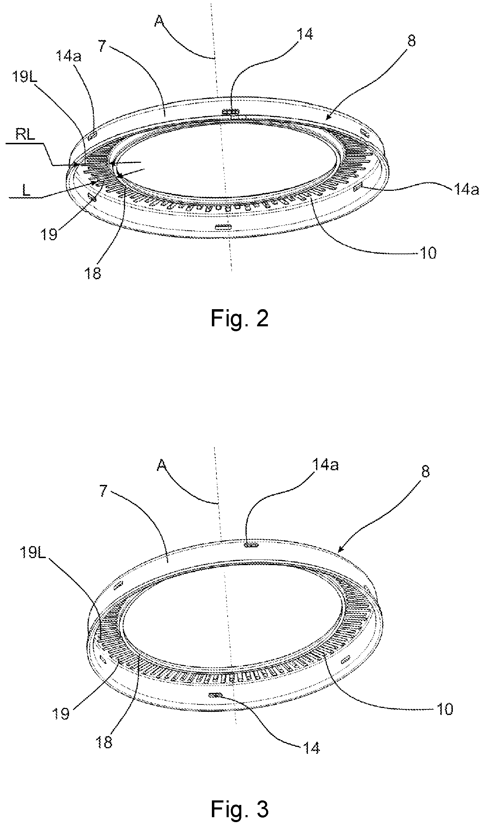

In den Figuren 2 und 3 sind jeweils ausschließlich die Polringe 8 der Radnabenanordnung dargestellt, wobei in Figur 2 eine erste Ausführungsform und in Figur 3 eine zweite Ausführungsform eines Polrings 8 vorgeschlagen werden. Gemäß den beiden Figuren ist der Impulsgeberabschnitt 10 mit in Umfangsrichtung gleichmäßig verteilten Öffnungen, vorzugsweise Schlitzen 19, 19L, versehen. Einige der Öffnungen bzw. Schlitze 19, 19L weisen zumindest eine Erstreckung RL nach außen hin auf, die mindestens bis zum Radius des Innenumfangs 4 des Nabenhalses 3 reicht. Dabei ist die Erstreckung R die für die Sensierung durch den ABS-Sensor notwendige Erstreckung, während die Erstreckung RL nach außen hin zwischen 2 und 10 mm größer ist, als die Erstreckung R.

Die längeren Öffnungen bzw. Schlitze 19L weisen eine solche radiale Erstreckung RL nach außen hin auf, dass sie bis zu dem größten Radius des stirnseitig ausgebildeten Werkzeugeingriffsbereich 13 oder bis zu der nicht dargestellten stirnseitigen Fase reichen. Im Nabeninneren angesammeltes Schmutzwasser und kleinere Schmutzpartikel können daher in jedem Fall durch die nach außen hin verlängerten Abschnitte der Öffnungen bzw. Schlitze 19L wieder austreten, was im Fahrbetrieb durch die Zentrifugalkräfte begünstigt wird.

Alle anderen Öffnungen bzw. Schlitze 19 hingegen weisen, damit der Polring 8 eine möglichst hohe mechanische Festigkeit beibehält, nur eine Länge und insbesondere eine Erstreckung R nach außen auf, die nicht größer ist, als dies für die sichere Sensierung durch den Sensor 6 technisch erforderlich ist. Über die kürzeren Öffnungen bzw. Schlitze 19 erfolgt keine nennenswerte Entwässerung des Nabeninneren.

Beide Ausführungsformen weisen auf ihren Befestigungsabschnitten 7 Aussparungen 14 in Form von radialen Schlitzen auf, die über den Umfang des Befestigungsabschnitts 7 verteilt angeordnet sind und uneinheitliche axiale Abstände zu dem Impulsgeberabschnitt 10 aufweisen. Gemäß der Figuren 2 und 3 sind jeweils sechs Aussparungen 14 am Polring 8 ausgebildet, wobei deren Anzahl, je nach Anwendungsfall, auch höher oder niedriger sein kann. Ferner sind die radialen Abstände der Aussparungen 14 zueinander identisch.

Gemäß der Figur 2, die eine perspektivische Ansicht des Polrings 8 nach einer ersten Ausführungsform wiedergibt, sind die Aussparungen 14 jeweils paarweise ausgebildet, wobei eine Aussparung 14 jeweils eine ihr in Bezug auf die Polringachse A gegenüberliegende Aussparung 14 aufweist. Die Aussparungspaare weisen untereinander uneinheitliche axiale Abstände zu den Impulsgeberabschnitt 10 auf. Ein Paar ist am unteren Rand des Befestigungsabschnitts 7 hin zum Flansch 21, ein zweites entgegengesetzt am oberen Rand hin zum Impulsgeberabschnitt 10, und ein drittes Paar dazwischenliegend ausgebildet.

Die Aussparungen 14 der zweiten Ausführungsform gemäß Figur 3 zeigen eine von Figur 2 abweichende Verteilung der Aussparungen 14. In dieser Ausführungsform sind alle Aussparungen 14 jeweils mit einem eigenen axialen Abstand über die Außenumfangsfläche des Befestigungsabschnitts 7 verteilt. Daraus ergeben sich somit sechs Aussparungen 14 mit jeweils einer eigenen axialen Position zwischen dem oberen und unteren Rand. Dabei sind die Aussparungen 14 so zueinander angeordnet, dass die jeweils benachbarten Aussparungen 14 den jeweils geringsten axialen Abstand zu der mittigen Aussparung 14 aufweisen. Folglich kann von einer Spiralform, in der die Aussparungen 14 auf dem Befestigungsabschnitt 7 angeordnet sind, gesprochen werden.

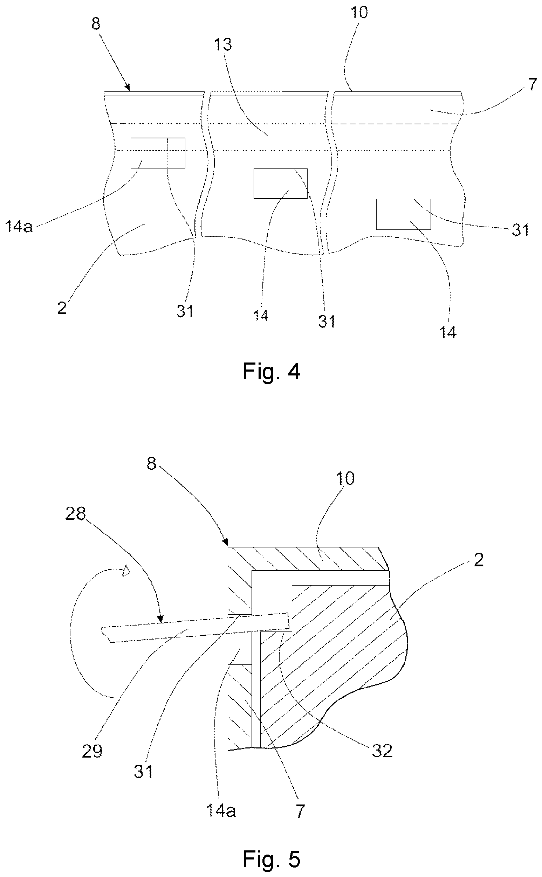

Figur 4 offenbart eine schematische Seitenansicht der Radnabe 2 mit darauf aufgepresstem Polring 8, zur Verdeutlichung des Zusammenspiels von axial versetzt ausgebildeten Aussparungen 14 und dem am stirnseitigen Ende des Nabenhalses 3 ausgebildeten Werkzeugeingriffsbereich 13. Zu erkennen sind drei Aussparungen 14, 14a mit jeweils unterschiedlicher axialer Position auf dem Befestigungsabschnitt 7, wobei nur die dem Impulsgeberabschnitt 10 axial nächstgelegene Aussparung 14a den Werkzeugeingriffsbereich 13 zumindest teilweise radial überdeckt. Die Überdeckung ist in axialer Richtung so groß, dass der insoweit noch zugängliche Werkzeugeingriffsbereich 13 genügend Platz bietet, um das Ende eines Hebelwerkzeugs 28 aufzunehmen.

Figur 5 zeigt eine schematische Schnittdarstellung der Radnabe 2 mit aufgepresstem Polring 8 sowie einem arretierten Hebelwerkzeug 28, zur besseren Darstellung des Hebelmechanismus. Das Hebelwerkzeug 28 ist mit seinem Ende in die Aussparung 14a geführt und kommt zugleich an dem Werkzeugeingriffsbereich 13 und an einer stirnseitigen Anlage 32 des Werkzeugeingriffsbereichs 13 zum Anliegen. Wird nun das Hebelwerkzeug 28 angezogen, wobei es an der Anlage 32 aufliegt und um diesen Bereich schwenkt, kommt das Hebelwerkzeug 28 fahrzeugseitig ebenfalls mit seinem Hebelarm 29 an der Wand 31 der Aussparung 14a zum Anliegen. Mit anderen Worten handelt es sich bei der Wand 31 um die dem Impulsgeberabschnitt 10 nächstliegende Längskante der Aussparung 14, 14a. Wird die Hebelbewegung des Hebelarms 29 fortgesetzt, wird in Axialrichtung eine Kraft auf den Polring 8 ausgeübt, die die Kraft des Reibschlusses zwischen dem Polring 8 und dem Polringsitz 12 übersteigt, sodass sich der Polring etwas verschiebt.

Ist der Hebelweg ausgereizt, hat sich bereits eine zweite Aussparung 14, gemäß Figur 4, optimal zum Werkzeugeingriffsbereich 13 positioniert, um den zuvor genannten Schritt zu wiederholen. Die Aussparungen 14, 14a sind daher in ihrer Position und Anzahl so gewählt, dass spätestens bei Ausführen des oben genannten Vorgangs an der letzten Aussparung 14, die zugleich jene am nächsten zum unteren Rand des Befestigungsbereiches 7 ist, der Polring 8 vollständig von dem Polringsitz 12 herunter gleitet.

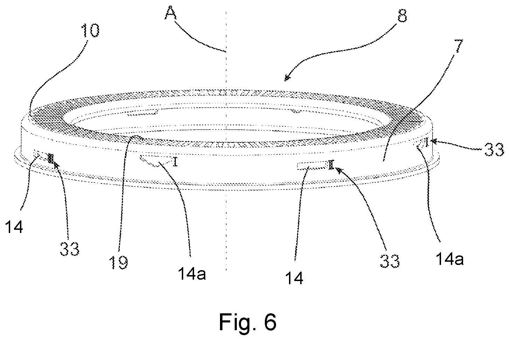

Figur 6 zeigt eine weitere, dritte Ausführungsform des Polrings 8, die teilweise aus dem Polring der ersten Ausführungsform abgeleitet ist. Gemäß der dritten Ausführungsform sind sowohl die Aussparungen 14a als auch die weiteren Aussparungen 14 jeweils paarweise in dem Befestigungsabschnitt 7 ausgebildet, wobei jeweils die eine Aussparung des Paars der anderen Aussparung des Paars in Bezug auf die Polringachse A genau gegenüberliegt. Bei dieser Ausführungsform werden bevorzugt zwei Hebelwerkzeuge 28 angesetzt und synchron betätigt, wodurch jegliches Verkanten des Polrings bei dessen Abstreifen von der Radnabe 2 ausgeschlossen ist.

Die zwei Aussparungen jedes Aussparungspaars weisen denselben axialen Abstand zu dem Impulsgeberabschnitt 10 auf. Dabei ist mindestens ein und sind vorzugsweise zwei Aussparungspaare, die aus Aussparungen 14a zusammengesetzt sind, am oberen Rand des Befestigungsabschnitts 7 nahe zum Impulsgeberabschnitt 10 angeordnet. Ein weiteres Aussparungspaar ist nahe des anderen, unteren Randes des Befestigungsabschnitts 7, und ein nochmals weiteres Aussparungspaar ist in einer axialen Position zwischen den genannten Aussparungspaaren angeordnet.

Natürlich können dazwischen noch zusätzliche Aussparungspaare mit jeweils weiteren axialen Positionen am Befestigungsabschnitt 7 angeordnet sein.

Die Aussparungen 14a des Aussparungspaars und vorzugsweise der zwei Aussparungspaare, die nahe zum oberen Rand und damit nahe zum Impulsgeberabschnitt 10 ausgebildet sind, weisen den geringsten axialen Abstand zu dem Impulsgeberabschnitt 10 auf, im Vergleich zu allen anderen Aussparungen 14.

In einer bevorzugten Ausgestaltung sind die vier Aussparungen 14a der zwei Aussparungspaare mit dem geringsten axialen Abstand zum Impulsgeberabschnitt in 90 °-Winkelabständen zueinander um die Polringachse A herum angeordnet. In dieser bevorzugten Ausgestaltung befinden sich die vier auf zwei Paare verteilten Aussparungen 14a auf Umfangspositionen, die zum Beispiel 0 °, 90 °, 180 ° und 270 ° betragen. Das erste weitere Aussparungspaar befindet sich dann auf Umfangspositionen von 45 ° und 225 ° und das nochmals weitere Aussparungspaar auf Umfangspositionen von 135 ° und 315 °.

Die Aussparungen 14a der ein oder zwei Aussparungspaare mit dem geringsten axialen Abstand zu dem Impulsgeberabschnitt 10 können eine gegenüber allen anderen Aussparungen 14 abweichende Form bzw. Kontur aufweisen. Die Kontur erstreckt sich bei Fig. 6 mit ihrer vom Impulsgeberbereich 10 abgewandten Seite keilförmig oder anderweitig verjüngend hin zum anderen Rand des Befestigungsabschnitts 7, und erlaubt so aufgrund der größeren Öffnungsfläche einen besseren Blick auf den darunter angeordneten Werkzeugeingriffsbereich 13. Außerdem signalisiert bereits die jeweils abweichende Form bzw. Kontur dem Bediener, dass dies jene Aussparungen 14a sind, an denen die beiden Hebelwerkzeuge 28 als erstes angesetzt werden müssen.

Um die Reihenfolge festzulegen, in denen ein Monteur die Hebelwerkzeuge 28 durch die Aussparungen 14, 14a an die frei liegende Anlage 32 führen kann, weisen die vier Aussparungen 14a der zwei Aussparungspaare mit dem geringsten axialen Abstand zum Impulsgeberabschnitt 10 Markierungen 33 auf, die anders sind als etwaige Markierungen 33 an den anderen Aussparungen 14 der anderen Aussparungspaare mit größerem axialen Abstand zum Impulsgeberabschnitt 10. Beispielsweise handelt es sich bei den Markierungen 33, gemäß Figur 6, um die römischen Zahlen "I" bis "III", die die neben sich angeordneten Aussparungen 14, 14a kennzeichnen, entsprechend der Einführungsreihenfolge der Hebelwerkzeuge 28 in die Aussparungen 14, 14a.

### Bezugszeichenliste

- 1: Achselement
- 2: Radnabe
- 3: Nabenhals
- 4: Innenumfang
- 5: Öffnung

- 6: Sensor
- 7: Befestigungsabschnitt
- 8: Polring
- 9: ABS-Sensor
- 10: Impulsgeberabschnitt

- 11: Außenumfang
- 12: Polringsitz
- 13: Werkzeugeingriffsbereich
- 14: Aussparung
- 14a: Aussparung
- 15: Hebelwerkzeug

- 17: Stirnfläche
- 18: Umbördelung
- 19: Öffnung, Schlitz
- 19L: verlängerter Schlitz, Öffnung
- 20a: inneres Wälzlager
- 20b: äußeres Wälzlager

- 21: Flansch
- 22: Bremsscheibe
- 23: Radbolzen
- 24: Ring
- 25: Sicherungsring
- 26: Dichtung
- 27: Montagehülse
- 28: Hebelwerkzeug
- 29: Hebelarm
- 31: Wand
- 32: Anlage
- 33: Markierung

- A: Radnabenachse
- A: Polringachse
- RL: Erstreckung
- R: Erstreckung

## Patentansprüche

1. Radnabenanordnung für ein Fahrzeugrad, mit einer über eine Nabenlagerung drehbar auf einem Achselement (1) angeordneten Radnabe (2), die fahrzeuginnenseitig in einem Nabenhals (3) endet, dessen Innenumfang (4) eine Öffnung (5) für den zentralen Durchtritt des Achselements (1) definiert und auf dessen Außenumfang (11) ein Befestigungsabschnitt (7) eines Polrings (8) eines ABS-Sensors montiert ist, wobei Bestandteil des Polrings (8) ein einstückig mit dem Befestigungsabschnitt (7) ausgebildeter Impulsgeberabschnitt (10) ist, der sich von dem Befestigungsabschnitt (7) zu der Radnabenachse (A) hin erstreckt, wobei der Nabenhals (3) an seinem Außenumfang (11) versehen ist
- mit einem koaxial zu der Radnabenachse (A) sich erstreckendem Polringsitz (12), auf dem sich der Befestigungsabschnitt (7) mit seiner Innenseite radial abstützt,
**dadurch gekennzeichnet, dass** der Nabenhals (3) an seinem Außenumfang (11) ferner versehen ist
mit einem um den Nabenhals (3) herumführenden und gegenüber dem Polringsitz (12) zur Radnabenachse (A) hin abgesenkten Werkzeugeingriffsbereich (13),
und dass der Befestigungsabschnitt (7) Aussparungen (14) aufweist, die über den Umfang des Befestigungsabschnitts (7) verteilt angeordnet sind und uneinheitliche axiale Abstände zu dem Impulsgeberabschnitt (10) aufweisen, wobei die dem Impulsgeberabschnitt (10) axial nächstgelegene Aussparung (14) den Werkzeugeingriffsbereich (13) zumindest teilweise radial überdeckt.

2. Radnabenanordnung nach Anspruch 1, **dadurch gekennzeichnet, dass** der Werkzeugeingriffsbereich (13) als eine Stufe am fahrzeugseitigen Ende des Nabenhalses (3) ausgebildet ist.

3. Radnabenanordnung nach Anspruch 1, **dadurch gekennzeichnet, dass** der Werkzeugeingriffsbereich (13) als eine umlaufende Nut im Bereich des Polringsitzes (12) ausgebildet ist.

4. Radnabenanordnung nach Anspruch 1, **dadurch gekennzeichnet, dass** der Polring (8) ein Stanz-Biegeteil aus Metallblech ist.

5. Radnabenanordnung nach einem der Ansprüche 1 bis 3, **dadurch gekennzeichnet, dass** der Polringsitz (12) und der Werkzeugeingriffsbereich (13) spanend bearbeitet und mit einer Rostschutzschicht versehen sind.

6. Radnabenanordnung nach einem der vorangehenden Ansprüche, **dadurch gekennzeichnet, dass** der Polring (8) auf den Polringsitz (12) der Radnabe (2) axial aufgepresst, und dort ausschließlich reibschlüssig gehalten ist.

7. Radnabenanordnung nach einem der vorangehenden Ansprüche, **dadurch gekennzeichnet, dass** eine axiale Abstützung des Polrings (8) ausschließlich an einer zwischen dem Innenumfang (4) und dem Polringsitz (12) ausgebildeten Stirnfläche (17) des Nabenhalses (3) erfolgt.

8. Radnabenanordnung nach Anspruch 1 oder 4, **dadurch gekennzeichnet, dass** der Impulsgeberabschnitt (10) an seinem Innenrand mit einer Umbördelung (18) versehen ist.

9. Radnabenanordnung nach einem der vorangehenden Ansprüche, **dadurch gekennzeichnet, dass** der Impulsgeberabschnitt (10) mit in Umfangsrichtung gleichmäßig verteilten Öffnungen (19, 19L), vorzugsweise Schlitzen, versehen ist, und dass zumindest einige der Öffnungen bzw. Schlitze (19, 19L) eine Erstreckung (RL) nach außen hin aufweisen, die mindestens bis zum Radius des Innenumfangs (4) des Nabenhalses (3) reicht.

10. Polring eines ABS-Sensors zur Drehsensierung eines Fahrzeugrades, mit einem Befestigungsabschnitt (7) zur Montage des Polrings an einer Radnabe des Fahrzeugrades, und mit einem einstückig mit dem Befestigungsabschnitt (7) ausgebildeten Impulsgeberabschnitt (10), der sich, ausgehend von dem Befestigungsabschnitt (7), zu der Polringachse (A) hin erstreckt und mit in Umfangsrichtung gleichmäßig verteilten Öffnungen (19, 19L), vorzugsweise Schlitzen, versehen ist, **dadurch gekennzeichnet, dass** der Befestigungsabschnitt (7) Aussparungen (14) aufweist, die über den Umfang des Befestigungsabschnitts (7) verteilt angeordnet sind und uneinheitliche axiale Abstände zu dem Impulsgeberabschnitt (10) aufweisen, wobei die Aussparungen (14) als in Umfangsrichtung sich erstreckende Schlitze ausgebildet sind.

11. Polring nach Anspruch 10, **dadurch gekennzeichnet, dass** eine Aussparung (14) jeweils eine ihr in Bezug auf die Polringachse (A) gegenüberliegende Aussparung (14) aufweist, wobei die Aussparungspaare untereinander uneinheitliche axiale Abstände zu dem Impulsgeberabschnitt (10) aufweisen.

12. Polring nach Anspruch 10, **dadurch gekennzeichnet, dass** zwei ein Aussparungspaar bildende Aussparungen (14a) in Bezug auf die Polringachse (A) einander gegenüberliegend angeordnet sind und denselben axialen Abstand zu dem Impulsgeberabschnitt (10) aufweisen, wobei dieser axiale Abstand geringer ist, als der anderer Aussparungen (14).

13. Polring nach Anspruch 12, **gekennzeichnet durch** zwei weitere, ebenfalls ein einander gegenüberliegendes Aussparungspaar bildende und den geringen axialen Abstand zu dem Impulsgeberabschnitt (10) aufweisende Aussparungen (14a), wobei die Aussparungen (14a) der beiden Aussparungspaare in 90 °-Winkelabständen zueinander versetzt um die Polringachse (A) herum angeordnet sind.

14. Polring nach Anspruch 13, **dadurch gekennzeichnet, dass** zwischen den zwei Aussparungspaaren mit dem identischen und geringen axialen Abstand zu dem Impulsgeberabschnitt (10) andere Aussparungspaare mit anderen axialen Abständen zu dem Impulsgeberabschnitt (10) angeordnet sind.

15. Polring nach einem der Ansprüche 10 bis 14, **dadurch gekennzeichnet, dass** die Aussparungen (14a) mit dem geringen axialen Abstand zu dem Impulsgeberabschnitt (10) eine zu allen anderen Aussparungen (14) abweichende Kontur aufweisen.

16. Polring nach einem der Ansprüche 10 bis 15, **dadurch gekennzeichnet, dass** die Aussparungen (14a) mit dem geringen axialen Abstand zu dem Impulsgeberabschnitt (10) Markierungen (33) aufweisen, die unterschiedlich sind zu den Markierungen (33) an allen anderen Aussparungen (14).

17. Polring nach einem der Ansprüche 10 bis 16, **dadurch gekennzeichnet, dass** die Öffnungen (19, 19L) in dem Impulsgeberabschnitt (10) unterschiedliche radiale Erstreckungen (R, RL) aufweisen, wobei die Erstreckung (R) die für die Sensierung durch den ABS-Sensor notwendige Erstreckung ist, wobei die Erstreckung (RL) nach außen hin zwischen 2 und 10 mm größer ist, als die Erstreckung (R).

18. Polring nach einem der Ansprüche 10 bis 17, **dadurch gekennzeichnet, dass** der Impulsgeberabschnitt (10) an seinem Innenrand mit einer Umbördelung (18) versehen ist.

19. Polring nach einem der Ansprüche 10 bis 18, **dadurch gekennzeichnet, dass** die gestanzten Aussparungen (14, 14a) entlang ihrer Kontur eine nach außen gerichtete Falzkante aufweisen.

## Claims

1. Wheel hub assembly for a vehicle wheel, comprising a wheel hub (2), which is arranged so as to be rotatable on an axle element (1) via a hub bearing and which ends on the inside of a vehicle in a hub neck (3), the inner circumference (4) of which defines an opening (5) for the central passage of the axle element (1) and on the outer circumference (11) of which a fastening portion (7) of a pole ring (8) of an ABS sensor is mounted, part of the pole ring (8) being a pulse generator portion (10), formed integrally with the fastening portion (7) and extending from the fastening portion (7) toward the wheel hub axis (A), the hub neck (3) being provided on the outer circumference (11) thereof
- comprising a pole ring seat (12) which extends coaxially to the wheel hub axis (A) and on which the fastening portion (7) is radially supported by its inner side, **characterized in that** the hub neck (3) is further provided, on its outer circumference (11), with a tool engagement region (13), which leads around the hub neck (3) and is lowered toward the wheel hub axis (A) in relation to the pole ring seat (12),
and **in that** the fastening portion (7) comprises recesses (14), which are arranged so as to be distributed over the circumference of the fastening portion (7) and comprise non-uniform axial distances from the pulse generator portion (10), the recess (14) located axially closest to the pulse generator portion (10) at least partially radially covering the tool engagement region (13).

2. Wheel hub assembly according to claim 1, **characterized in that** the tool engagement region (13) is designed as a step on the vehicle-side end of the hub neck (3).

3. Wheel hub assembly according to claim 1, **characterized in that** the tool engagement region (13) is designed as a circumferential groove in the region of the pole ring seat (12).

4. Wheel hub assembly according to claim 1, **characterized in that** the pole ring (8) is a punched bent part made of sheet metal.

5. Wheel hub assembly according to any of claims 1 to 3,
**characterized in that** the pole ring seat (12) and the tool engagement region (13) are machined and provided with a rust protection layer.

6. Wheel hub assembly according to any of the preceding claims, **characterized in that** the pole ring (8) is pressed axially onto the pole ring seat (12) of the wheel hub (2), and is held there exclusively by friction.

7. Wheel hub assembly according to any of the preceding claims, **characterized in that** an axial support of the pole ring (8) takes place exclusively on an end face (17) of the hub neck (3) formed between the inner circumference (4) and the pole ring seat (12).

8. Wheel hub assembly according to claim 1 or claim 4, **characterized in that** the pulse generator portion (10) is provided with a beading (18) at its inner edge.

9. Wheel hub assembly according to any of the preceding claims, **characterized in that** the pulse generator portion (10) is provided with openings (19, 19L), preferably slots, which are uniformly distributed in the circumferential direction, **and in that** at least some of the openings or slots (19, 19L) comprise an extension (RL) toward the outside which extends at least up to the radius of the inner circumference (4) of the hub neck (3).

10. Pole ring of an ABS sensor for rotational sensing of a vehicle wheel, comprising a fastening portion (7) for mounting the pole ring on a wheel hub of the vehicle wheel, and having a pulse generator portion (10) which is formed integrally with the fastening portion (7) and which, starting from the fastening portion (7), extends toward the pole ring axis (A) and is provided with openings (19, 19L), preferably slots, which are uniformly distributed in the circumferential direction, **characterized in that** the fastening portion (7) comprises recesses (14) which are arranged so as to be distributed over the circumference of the fastening portion (7) and comprise non-uniform axial distances from the pulse generator portion (10), the recesses (14) being slots extending in the circumferential direction.

11. Pole ring according to claim 10, **characterized in that** a recess (14) in each case has a recess (14) opposite thereto in relation to the pole ring axis (A), the recess pairs comprising non-uniform axial distances from the pulse generator portion (10).

12. Pole ring according to claim 10, **characterized in that** two recesses (14a) forming a recess pair are arranged opposite one another in relation to the pole ring axis (A) and comprise the same axial distance from the pulse generator portion (10), said axial distance being smaller than that of other recesses (14).

13. Pole ring according to claim 12, **characterized by** two further recesses (14a), likewise forming a recess pair which are opposite one another and having the small axial distance from the pulse generator portion (10), the recesses (14a) of the two recess pairs being arranged offset from one another at 90° angular distances about the pole ring axis (A).

14. Pole ring according to claim 13, **characterized in that** other recess pairs having different axial distances from the pulse generator portion (10) are arranged between the two recess pairs having the identical small axial distance from the pulse generator portion (10).

15. Pole ring according to any of claims 10 to 14, **characterized in that** the recesses (14a) having the small axial distance from the pulse generator portion (10) comprise a contour that deviates from all other recesses (14).

16. Pole ring according to any of claims 10 to 15, **characterized in that** the recesses (14a) having the small axial distance from the pulse generator portion (10) comprise markings (33) which are different from the markings (33) on all other recesses (14).

17. Pole ring according to any of claims 10 to 16, **characterized in that** the openings (19, 19L) in the pulse generator portion (10) comprise different radial extensions (R, RL), the extension (R) being the extension necessary for sensing by the ABS sensor, the extension (RL) being between 2 and 10 mm greater than the extension (R) toward the outside.

18. Pole ring according to any of claims 10 to 17, **characterized in that** the pulse generator portion (10) is provided with a beading (18) at its inner edge.

19. Pole ring according to any of claims 10 to 18, **characterized in that** the punched recesses (14, 14a) comprise an outwardly directed fold edge along their contour.

## Revendications

1. Ensemble de moyeu de roue pour une roue de véhicule, avec un moyeu de roue (2) disposé de manière rotative sur un élément d'essieu (1) par l'intermédiaire d'un palier de moyeu, qui se termine côté intérieur du véhicule par un col de moyeu (3), dont la périphérie intérieure (4) définit une ouverture (5) pour le passage central de l'élément d'essieu (1) et sur la périphérie extérieure (11) duquel est montée une partie de fixation (7) d'une bague polaire (8) d'un capteur ABS, dans lequel une partie génératrice d'impulsions (10) réalisée d'un seul tenant avec la partie de fixation (7), qui s'étend de la partie de fixation (7) vers l'axe de moyeu de roue (A), fait partie de la bague polaire (8), dans lequel le col de moyeu (3) est pourvu sur sa périphérie extérieure (11)
- d'un siège de bague polaire (12) s'étendant coaxialement à l'axe de moyeu de roue (A), sur lequel la partie de fixation (7) s'appuie radialement avec son côté intérieur, **caractérisé en ce que** le col de moyeu (3) est en outre pourvu sur sa périphérie extérieure (11) d'une zone d'engagement d'outil (13) faisant le tour du col de moyeu (3) et abaissée par rapport au siège de bague polaire (12) vers l'axe de moyeu de roue (A) et **en ce que** la partie de fixation (7) présente des évidements (14), qui sont répartis sur la périphérie de la partie de fixation (7) et présentent des distances axiales non uniformes par rapport à la partie génératrice d'impulsions (10), dans lequel l'évidement (14) le plus proche axialement de la partie génératrice d'impulsions (10) recouvre au moins partiellement radialement la zone d'engagement d'outil (13).

2. Ensemble de moyeu de roue selon la revendication 1, **caractérisé en ce que** la zone d'engagement d'outil (13) est réalisée sous la forme d'un gradin à l'extrémité côté véhicule du col de moyeu (3).

3. Ensemble de moyeu de roue selon la revendication 1, **caractérisé en ce que** la zone d'engagement d'outil (13) est réalisée sous la forme d'une rainure périphérique dans la zone du siège de bague polaire (12).

4. Ensemble de moyeu de roue selon la revendication 1, **caractérisé en ce que** la bague polaire (8) est une pièce découpée et pliée en tôle métallique.

5. Ensemble de moyeu de roue selon l'une quelconque des revendications 1 à 3, **caractérisé en ce que** le siège de bague polaire (12) et la zone d'engagement d'outil (13) sont usinés et pourvus d'une couche de protection contre la rouille.

6. Ensemble de moyeu de roue selon l'une quelconque des revendications précédentes, **caractérisé en ce que** la bague polaire (8) est pressée axialement sur le siège de bague polaire (12) du moyeu de roue (2), et y est maintenue exclusivement par friction.

7. Ensemble de moyeu de roue selon l'une quelconque des revendications précédentes, **caractérisé en ce qu'**un appui axial de la bague polaire (8) s'effectue exclusivement sur une face frontale (17) du col de moyeu (3) réalisée entre la périphérie intérieure (4) et le siège de bague polaire (12).

8. Ensemble de moyeu de roue selon la revendication 1 ou 4, **caractérisé en ce que** la partie génératrice d'impulsions (10) est pourvue d'un bord rabattu (18) sur son bord intérieur.

9. Ensemble de moyeu de roue selon l'une quelconque des revendications précédentes, **caractérisé en ce que** la partie génératrice d'impulsions (10) est pourvue d'ouvertures (19, 19L), de préférence de fentes, réparties uniformément dans la direction périphérique, et **en ce qu'**au moins certaines des ouvertures ou fentes (19, 19L) présentent une extension (RL) vers l'extérieur qui s'étend au moins jusqu'au rayon de la périphérie intérieure (4) du col de moyeu (3).

10. Bague polaire d'un capteur ABS pour la détection de la rotation d'une roue de véhicule, avec une partie de fixation (7) pour le montage de la bague polaire sur un moyeu de roue de la roue de véhicule, et avec une partie génératrice d'impulsions (10) réalisée d'un seul tenant avec la partie de fixation (7), qui s'étend, en partant de la partie de fixation (7), vers l'axe de la bague polaire (A) et qui est pourvue d'ouvertures (19, 19L), de préférence des fentes, **caractérisé en ce que** la partie de fixation (7) présente des évidements (14) qui sont répartis sur la périphérie de la partie de fixation (7) et qui présentent des distances axiales non uniformes par rapport à la partie génératrice d'impulsions (10), dans lequel les évidements (14) sont réalisés sous forme de fentes s'étendant dans la direction périphérique.

11. Bague polaire selon la revendication 10, **caractérisée en ce qu'**un évidement (14) présente respectivement un évidement (14) qui lui est opposé par rapport à l'axe de bague polaire (A), dans laquelle les paires d'évidements présentent entre elles des distances axiales non uniformes par rapport à la partie génératrice d'impulsions (10) .

12. Bague polaire selon la revendication 10, **caractérisée en ce que** deux évidements (14a) formant une paire d'évidements sont disposés à l'opposé l'un de l'autre par rapport à l'axe de bague polaire (A) et présentent la même distance axiale par rapport à la partie génératrice d'impulsions (10), dans laquelle cette distance axiale est inférieure à celle des autres évidements (14).

13. Bague polaire selon la revendication 12, **caractérisée par** deux autres évidements (14a) formant également une paire d'évidements à opposé l'une de l'autre et présentant la faible distance axiale par rapport à la partie génératrice d'impulsions (10), dans laquelle les évidements (14a) des deux paires d'évidements sont disposés autour de l'axe de bague polaire (A) à des distances angulaires de 90° l'une par rapport à l'autre.

14. Bague polaire selon la revendication 13, **caractérisée en ce que**, entre les deux paires d'évidements avec la distance axiale identique et faible par rapport à la partie génératrice d'impulsions (10), sont disposées d'autres paires d'évidements avec d'autres distances axiales par rapport à la partie génératrice d'impulsions (10).

15. Bague polaire selon l'une quelconque des revendications 10 à 14, **caractérisée en ce que** les évidements (14a) avec la faible distance axiale par rapport à la partie génératrice d'impulsions (10) présentent un contour s'écartant de tous les autres évidements (14).

16. Bague polaire selon l'une quelconque des revendications 10 à 15, **caractérisée en ce que** les évidements (14a) avec la faible distance axiale par rapport à la partie génératrice d'impulsions (10) présentent des marques (33) qui sont différentes des marques (33) sur tous les autres évidements (14).

17. Bague polaire selon l'une quelconque des revendications 10 à 16, **caractérisée en ce que** les ouvertures (19, 19L) dans la partie génératrice d'impulsions (10) présentent des extensions radiales (R, RL) différentes, dans laquelle l'extension (R) est l'extension nécessaire à la détection par le capteur ABS, dans laquelle l'extension (RL) vers l'extérieur est supérieure d'entre 2 et 10 mm à l'extension (R).

18. Bague polaire selon l'une quelconque des revendications 10 à 17, **caractérisée en ce que** la partie génératrice d'impulsions (10) est pourvue d'un bord rabattu (18) sur son bord intérieur.

19. Bague polaire selon l'une quelconque des revendications 10 à 18, **caractérisée en ce que** les évidements (14, 14a) estampés présentent le long de leur contour une arête de pliage orientée vers l'extérieur.
